(19) **Europäisches Patentamt**

**European Patent Office**

**Office européen des brevets**

(11) Veröffentlichungsnummer: **0 003 477**
**B1**

(12) **EUROPÄISCHE PATENTSCHRIFT**

(45) Veröffentlichungstag der Patentschrift: **15.12.82**

(21) Anmeldenummer: **78101733.0**

(22) Anmeldetag: **16.12.78**

(51) Int. Cl.³: **C 08 L 77/00**

(54) **Konditionierungsfreie Polyamid-Formmassen.**

(30) Priorität: **13.02.78 DE 2805892**

(43) Veröffentlichungstag der Anmeldung:
**22.08.79 Patentblatt 79/17**

(45) Bekanntmachung des Hinweises auf die Patenterteilung:
**15.12.82 Patentblatt 82/50**

(84) Benannte Vertragsstaaten:
**DE FR GB IT**

(56) Entgegenhaltungen:
**US - A - 3 262 989**
**US - A - 3 822 227**

(73) Patentinhaber: **BAYER AG**
**Zentralbereich Patente, Marken und Lizenzen**
**D-5090 Leverkusen 1, Bayerwerk (DE)**

(72) Erfinder: **Heydenreich, Frieder, Dr.**
**Kohlstrasse 34**
**D-4030 Ratingen 6 (DE)**
Erfinder: **Korber, Helmut, Dr.**
**In der Hildscheid 18**
**D-5068 Odenthal (DE)**
Erfinder: **Tacke, Peter, Dr.**
**Brandenburger Strasse 12**
**D-4150 Krefeld (DE)**
Erfinder: **Fahnler, Friedrich, Ing.grad.**
**Wimmersweg 60**
**D-4150 Krefeld (DE)**
Erfinder: **Neuray, Dieter, Dr.**
**Buschstrasse 149**
**D-4150 Krefeld (DE)**

Courier Press, Leamington Spa, England.

Konditionierungsfreie Polyamid-Formmassen

Gegenstand der Erfindung ist ein Verfahren zur Erhöhung der Schlagzähigkeit von Polyamid-Formmassen, die gegebenenfalls weitere Zusätze wie Füll- und Verstärkungsstoffe enthalten.

Formkörper aus Polyamiden haben sich aufgrund ihrer mechanischen Festigkeitswerte, ihrer leichten Verarbeitbarkeit und weiterer vorteilhafter Eigenschaften ein weites Anwendungsgebiet gesichert. So werden Gehäuseschalen, Rollen, Zahnräder, Kipphebel und eine Vielzahl technischer Formgegenstände hergestellt. Von den vorteilhaften Eigenschaften der teilkristallinen Polyamid-Formmassen sind insbesondere die Härte, Abriebfestigkeit und die selbstschmierende Eigenschaft z.B. zur Herstellung von Zahnrädern wichtig. Gewisse Nachteile gegenüber anderen Formmassen haben aber Polyamid-Formmassen bei den Anwendungen, bei denen sehr hohe Anforderungen an die Zähigkeit gestellt werden. Um diesen Mangel zu beheben, werden in der Praxis Polyamid-Formgegenstände konditioniert, d.h. es wird den Formkörpern durch geeignete Verfahren ca. 3% Wasser zugeführt. Das Wasser erhöht die Zähigkeit erheblich. Nachteilig sind an diesem Verfahren jedoch die lange Dauer der Wasseraufnahme und die Tatsache, daß ein zusätzlicher Verarbeitungsschritt notwendig ist. Ebenfalls nachteilig wirkt sich die zumeist ungleichmäßige Verteilung des Wassers im Formgegenstand aus.

Es war daher Ziel der vorliegenden Erfindung, durch ein einfaches Verfahren die Zähigkeit von Polyamid-Formmassen wirkungsvoll zu erhöhen. Erfindungsgemäß wird diese Aufgabe gelöst, indem in Polyamid-Formmassen Polyäthylene, die nach einem bestimmten Verfahren oxidiert wurden, eingearbeitet werden.

Es wurde bereits früher versucht, die Zähigkeit der kristallinen Polyamid-Formmassen durch Zusatz von Polyolefinen zu verbessern. Zu diesem Zweck wurde beispielsweise P A-6 mit Polyäthylenen verschiedenen Molekulargewichts auf einem Doppelwellenextruder vermischt; dabei wurde insbesondere darauf Wert gelegt, daß das Vermischen unter Einwirkung von Scherkräften von mindestens 250 $s^{-1}$ erfolgte.

Auch in solcher Weise hergestellte Formmassen bzw. die daraus gefertigten Formkörper zeigen Inhomogenitäten, Schlieren und Oberflächenfehler sowie nicht zufriedenstellende Eigenschaften. Bei Biege- insbesondere bei Wechselbiegebeanspruchung zeigen die Formkörper Abschieferungen, die auch als Weißbruch bezeichnet werden, als Folge der Unverträglichkeit der beiden Komponenten.

Als Modifizierung dieses Verfahrens wurde vorgeschlagen, die Verträglichkeit des polaren Polyamids mit dem unpolaren Polyäthylen durch Zusatz von Peroxiden oder anderen Radikalbildnern zu verbessern. Hierbei sollten Polyamid- und Polyäthylen-Makromoleküle chemisch verbunden werden und dadurch eine verbesserte Homogenität erzielt werden. Die Kerbschlagzähigkeit solcherart hergestellter Produkte ist jedoch schlechter als die des reinen Polyolefins oder Polyamids.

Die Nachteile des bekannten Verfahrens werden vermieden, wenn erfindungsgemäß Polyamide mit speziell oxidierten Polyäthylenen homogen vermischt werden.

Aus der US—A 3 262 989 sind zwar Verfahren zur Verbesserung der Absiebfestigkeit von Polyamiden bekannt, indem man Polyhexamethylendiaminadipinsäureamid mit 0,1—5,0 Gew.-% eines teilweise oxidierten Polyethylens mit einem MG von 1000—3000, einer Säurezahl von 9—16 und einer Verseifungszahl von 24—30 mischt und extrudiert. Mischungen aus 80—95 Gew.-% Polyamiden, 5—20 Gew.-% Polyethylenen und 0,5—5 Gew.-% eines oxidierten Polyethylenwachses mit einem MG von $10^3$—$5 \cdot 10^3$ werden gemäß der Lehre der US—A 3 822 227 hergestellt. Die erfindungsgemäßen Polymermischungen sind aber aus diesem Stand der Technik nicht abzuleiten.

Gegenstand der Erfindung sind daher schlagzähe Polymermischungen aus

1) 70—99 Gew.-%, vorzugsweise 80—99 Gew.-%, bezogen auf die Gesamtmischung, an Polyamiden und

2) 1—30 Gew.-%, vorzugsweise 1—20 Gew.-%, bezogen auf die Gesamtmischung, an oxidierten Polyäthylen, die dadurch gekennzeichnet sind, daß als oxidierte Polyäthylene solche verwendet werden, die durch Oxidation der Schmelze von Polyäthylen mit einem Schmelzindex von 2—100 g/10 min nach DIN 53735 unter einem Druck von 1—150 bar bei Temperaturen von 100—300°C mit Sauerstoff oder sauerstoffhaltigen Gasen unter intensiver Durchmischung und einer Reaktionszeit von maximal 20 Min. erhalten worden sind.

Die oxidierten Polyäthylene werden nach dem in der DE—A1—27 58 785 beschriebenen Verfahren erhalten.

Dieses Verfahren beruht im wesentlichen auf der sehr raschen Einführung der Hydroperoxidgruppen in das Polyäthylen unter schonenden Reaktionsbedingungen. Es ist lediglich erforderlich, das Polymer kurzzeitig verhältnismäßig hohen Drucken und Temperaturen bei inniger Durchmischung mit Sauerstoff oder sauerstoffhaltigen Gasen auszusetzen. Ein Abbau des Materials unter Verkürzung der Ketten und Verringerung des Molekulargewichts wird weitgehend vermieden. Der Zusatz eines Katalysators ist nicht erforderlich, weil das Verfahren mit thermischer Initierung arbeitet.

Die Menge der auf diese Weise eingeführten Hydroperoxidgruppen entspricht etwa 1000 bis 10 000 ppm aktivem Sauerstoff. Die Hydroperoxidgruppen sind gleichmäßig über das Polyäthylen verteilt. Unter schärferen Reaktionsbedingungen können bei leichtem Abbau der Polyäthylene neben den Hydroperoxid- auch Carboxyl-, Ester- und Ketogruppen eingeführt werden. Die Menge der auf diese Weise eingeführten Gruppen beträgt 0—5%, bevorzugt 0—1% Säure- und 0—10% vorzugsweise 0—2% Estergruppen.

Im allgemeinen wird das Verfahren zur Herstellung der oxidierten Polymere so durchgeführt, daß man das Polyäthylen in einer Schneckenpresse schmilzt und komprimiert. Nach der Kompressionszone wird in die Induktionszone bei 190—300°C Sauerstoff oder sauerstoffhaltiges Gas im Überschuß unter einem Druck von 1—150 bar eingedrückt. Hier wird die Oxidation gestartet und in der anschließenden Oxidationszone bei 100—300°C zu Ende geführt. Auch hier wird Sauerstoff oder ein sauerstoffhaltiges Gas im Überschuß unter 1—150 bar Druck in die Schneckenpresse gedrückt. An die Oxidationszone schließt sich zur Druckhaltung eine Kompressionszone an und daran eine Entspannungszone, in der die Gase entweichen. Anschließend wird das Reaktionsprodukt extrudiert und granuliert.

Die oxidierten Polyäthylene können sich von Hochdruck- und Niederdruckpolyäthylenen ableiten.

Als Polyamide können aliphatische und aromatische Polyamide verwendet werden, vorzugsweise solche mit einer unteren Grenze der relativen Viskosität von 2,3 (gemessen an einer 1%igen Polyamid-Lösung in m-Kresol bei 25°C). Besonders bevorzugt werden aliphatische Polyamide und von diesen Polyamid-6 und Polyamid-6,6 mit den oxidierten Polyäthylenen abgemischt.

Die Einarbeitung der oxidierten Polyäthylene kann sowohl über Extruder als auch durch Zusatz·vor der Polymerisation der Polyamidmonomeren—sowohl bei dem diskontinuierlichen Autoklavenverfahren als auch bei dem kontinuierlichen Autoklavenkaskaden- oder VK-Rohrverfahren-erfolgen. Bei der Vermischung im Extruder werden Doppelwellenextruder bevorzugt. Es wird bei Temperaturen von 230 bis 320°C abgemischt. Die erfindungsgemäß modifizierten Polyamid-Formmassen zeichnen sich nicht nur durch eine ausgezeichnete Homogenität, sondern auch durch eine gegenüber unmodifizierten Polyamiden stark erhöhte Kerbschlagzähigkeit aus.

Die erfindungsgemäßen Polyamid-Formmassen können weiterhin übliche Zusätze wie z.B. Nukleierungsmittel, Farbstoffe, Pigmente, Stabilisatoren, optische Aufheller, Entformungsmittel, Weichmacher und Gleitmittel enthalten. Außerdem können sie Füll- und Verstärkungsstoffe in Mengen von 0—60 Gew.-%, vorzugsweise 1—50 Gew.-%, bezogen auf die Gesamtmischung, enthalten, wie z.B. Kreide, Kaolin, Talkum, Quarzmehl, Glimmer oder Feldspat sowie Glas- und Asbestfasern.

Die erfindungsgemäßen Polyamid-Formmassen besitzen hervorragende Verarbeitungseigenschaften wie z.B. gutes Fließvermögen und leichte Entformbarkeit und können nach den üblichen Verfahren wie Spritzgießen, Strangpressen, Schmelzspinnen oder Tiefziehen zu einwandfrei homogenen Formkörpern wie Fäden, Fasern, Borsten, Haushaltsartikeln, Maschinenteilen sowie technischem Halbzeug verarbeitet werden.

Beispiel 1

a) Hydroperoxidgruppen enthaltendes Hochdruckpolyäthylen wurde in einem gegensinnig rotierenden Doppelwellen-Laborextruder vom Typ Point Eight der Firma Welding Inc. mit 20 mm Wellendurchmesser D und 48 D Länge hergestellt. Die Kompression der Schmelze wurde durch Vergrößerung des Kerndurchmessers der Wellen in den Kompressionszonen erreicht. Der Durchsatz betrug 2000 g pro Stunde bei 200 UpM der Wellen. Die mittlere Verzweilzeit des Produktes im Extruder betrug 3 Min. Die Wellen waren mit einer durchgehenden Steigung von 1 D ausgerüstet.

Es wurden 120 l Luft pro Stunde unter 80 bar Druck in die Induktionszone und 240 l Luft pro Stunde unter 60 bar in die Oxidationszone gedrückt.

Das extrudierte Polyäthylen enthielt 2800 ppm Hydroperoxidgruppen (bestimmt als aktiver Sauerstoff) und hatte die Säurezahl 4. Der Schmelzindex MI nach Bed. E bei 190°C betrug 58 g/10 Min. [nach DIN 53735].

Die Längen und Temperaturen der Zonen des Extruders sind in der Tabelle 1 angegeben.

Als Ausgangsmaterial wurde ein handelsübliches Hochdruckpolyäthylen (Baylon[R] 19 N 430, Bayer AG) verwendet.

TABELLE 1

| Zone | Beispiel 1 | |
|---|---|---|
| | Länge | Temp. °C |
| Einzugs- | 2 D | 110° |
| Aufschmelz- | 5 D | 180° |
| Kompressions- | 2 D | 180° |
| Induktions- | 3 D | 233° |
| Oxidations- | 22 D | 210° |
| Kompressions- | 2 D | 210° |
| Entgasung- | 7 D | 180° |
| Ausstoß- | 5 D | 170° |
| | 48 D | |

Als Ausgangs-Polyamid wird ein Polycaprolactam mit folgenden Kennzahlen:

| $\eta_{rel}$ | 3,08 |
|---|---|
| Extraktgehalt: | 0,4% |
| Wassergehalt: | <0,15% |

verwendet. Die relative Viskosität wurde an einer Lösung von 1 g Polyamid in 100 ml m-Kresol bei 25°C ermittelt.

b) Die Einarbeitung von 12 Gew.-% des nach 1 a) hergestellten oxidierten Polyäthylens in das Polyamid erfolgte in einem Doppelwellenextruder ZSK 83, der auch mit Knetblöcken ausgestattet war. Die Einarbeitungstemperatur betrug 290°C. Das Produkt wurde in Strängen abgesponnen, auf ca. 70°C gekühlt und zu einem 3×2 mm Granulat gehackt und auf <0,15% Wasser getrocknet.

Die relative Viskosität des Granulats betrug $\eta_{rel}$=2,9 (gemessen wie oben angegeben), der Extraktgehalt 1,0%. Das Granulat wurde auf einer Schneckenspritzgußmaschine zu Normkleinstäben verspritzt, an denen nach DIN 53 453 die Kerbschlagzähigkeit gemessen wurde. Die Kerbschlagzähigkeit der aus der erfindungsgemäßen Polyamid-Formmasse hergestellten Probekörper betrug 14,8 kJ/m²; die Kerbschlagzähigkeit der aus unmodifizierter Polyamid-Formmasse hergestellten Probekörper beträgt dagegen nur 3 kJ/m².

Beispiel 2

a) Gemäß 1 a) wird ein oxidiertes Polyäthylen mit folgenden Kennzahlen:

| | |
|---|---|
| MI$_{190C}$: | 10 |
| Hydroxyperoxidgehalt: | 900 ppm |
| Säurezahl: | 1 |

hergestellt.

Der Durchsatz betrug 8000 g pro Stunde bei 500 UpM der Wellen. Die mittlere Verweilzeit der Produkte im Extruder betrug 0,8 Min.

Es wurden 90 l Luft pro Stunde unter 110 bar Druck in die Induktionszone und 150 l Luft pro Stunde unter 80 bar in die Oxidationszone gedrückt.

Die Längen und Temperaturen der Zonen des Extruders sind in Tabelle 2 angegeben.

TABELLE 2

| | Beispiel 2 | |
|---|---|---|
| Zone | Länge | Temp. °C |
| Einzugs- | 2 D | 125 |
| Aufschmelz- | 5 D | 180 |
| Kompressions- | 2 D | 200 |
| Induktions- | 3 D | 232 |
| Oxidations- | 22 D | 220 |
| Kompressions- | 2 D | 210 |
| Entgasungs- | 7 D | 200 |
| Ausstoß- | 5 D | 200 |
| | 48 D | |

b) Die Einarbeitung von 12 Gew.-% des nach 2 a) hergestellten oxidierten Polyäthylens erfolgte in der unter 1 b) beschriebenen Weise in ein Polyamid gemäß Beispiel 1.

Es wurde ein Granulat mit folgenden Kennzahlen erhalten:

| | |
|---|---|
| $\eta_{rel}$ (m-Kresol): | 2,90 |
| Extraktgehalt: | 0,90% |
| Wassergehalt: | <0,15% H$_2$O |

Das Granulat wurde wie unter 1 b) zu Normkleinstäben verspritzt, an denen nach DIN 53 543 die Kerbschlagzähigkeit zu 15,1 kJ/m² gemessen wurde.

Patentansprüche

1. Schlagzähe Polyamid-Formmassen bestehend aus
1) 70—99 Gew.-%, bezogen auf die Gesamtmischung, an Polyamiden und
2) 1—30 Gew.-%, bezogen auf die Gesamtmischung, an oxidierten Polyäthylenen
dadurch gekennzeichnet, daß als oxydierte Polyäthylene solche verwendet werden, die durch Oxidation der Schmelze von Polyethylen mit einem Schmelzindex von·2—100 g/10 Min. nach DIN 53735 unter einem Druck von 1—150 bar bei Temperaturen von 100—300°C mit Sauerstoff oder sauerstoffhaltigen Gasen unter intensiver Durchmischung und einem Gas-Kontakt von maximal 20 Min. erhalten worden sind.

2. Formmassen gemäß Anspruch 1, bestehend aus
80—99 Gew.-% der Komponente 1) und
1—20 Gew.-% der Komponente 2).

3. Formmassen gemäß Ansprüchen 1 und 2, dadurch gekennzeichnet, daß die Polyamidkomponente eine relative Mindestviskosität von 2,3 (gemessen an einer 1%igen Polyamidlösung in m-Kresol bei 25°C) aufweist.

4. Formmassen gemäß Ansprüchen 1 bis 3, dadurch gekennzeichnet, daß als Polyamidkomponente Polyamid 6 oder Polyamid-6,6 verwendet wird.

Revendications

1. Matières à mouler en polyamide résistant au choc, composées de
1) 70—99% en poids, par rapport au mélange total, de polyamides et
2) 1—30% en poids, par rapport au mélange total, de polyéthylènes oxydés,
caractérisées en ce qu'on utilise comme polyéthylènes oxydés des polyéthylènes qui ont été obtenus par oxydation de la masse fondue de polyéthylènes ayant un indice de fusion de 2—100 g/10 minutes selon la norme DIN 53735 sous une pression de 1—150 bars à des températures de 100—300°C avec de l'oxygène ou des gaz contenant de l'oxygène, sous brassage intensif et avec une durée maximale de contact avec le gaz de 20 minutes.

2. Matières à mouler suivant la revendication 1, composées de
80—99% en poids du composant 1) et
1—20% en poids du composant 2).

3. Matières à mouler suivant les revendications 1 et 2, caractérisées en ce que le composant polyamidique présente une viscosité minimale relative de 2,3 (mesurée sur une solution à 1% du polyamide dans le m-crésol à 25°C.

4. Matières à mouler suivant les revendications 1 à 3, caractérisées en ce qu'on utilise comme composant polyamidique du polyamide 6 ou du polyamide 6,6.

## Claims

1. High-impact polyamide moulding compositions consisting of
1) 70—99% by weight, based on the total mixture, of polyamides and
2) 1—30% by weight, based on the total mixture, of oxidised polyethylenes, characterised in that the oxidised polyethylenes used are those which have been obtained by oxidising polyethylene in the melt having a melt index of 2—100 g/10 min according to DIN 53735 under a pressure of 1—150 bars at temperatures of 100—300°C with oxygen or oxygen-containing gases under intensive mixing and a gas contact of at most 20 min.

2. Moulding compositions according to Claim 1, consisting of
80—99% by weight of component 1) and
1—20% by weight of component 2).

3. Moulding compositions according to Claims 1 and 2, characterised in that the polyamide component has a relative minimum viscosity of 2.3 (as measured on a 1% polyamide solution in m-cresol at 25°C).

4. Moulding compositions according to Claims 1 to 3, characterised in that polyamide-6 or polyamide-6,6 is used as the polyamide component.